# EUROPEAN PATENT SPECIFICATION

(11) **EP 3 222 977 B1**
(45) Date of publication and mention of the grant of the patent: **06.05.2020**
(21) Application number: 17162788.8
(22) Date of filing: 24.03.2017
(51) Int. Cl.: G01F 1/684, G01F 1/696, G01F 1/698, G01F 1/32, G01F 5/00, G01F 7/00, G01F 25/00

(54) **SYSTEM AND METHOD FOR METERING GAS**
SYSTEM UND VERFAHREN ZUR MESSUNG VON GAS
SYSTÈME ET PROCÉDÉ DE MESURE DE GAZ

(30) Priority: 25.03.2016 US 201615081265
(43) Date of publication of application: 27.09.2017
(73) Proprietor: General Electric Company, Schenectady, NY 12345 (US)
(72) Inventor: CHEN, Cheng-Po, Niskayuna, NY New York 12309 (US); CHEN, Nannan, Niskayuna, NY New York 12309 (US); WANG, Mengli, Niskayuna, NY New York 12309 (US)
(74) Representative: Chas. Hude A/S

(56) References cited:
- JP-A- 2015 227 819
- US-A1- 2015 122 009
- US-B1- 6 550 324

## Description

### FIELD

Embodiments of the present disclosure relate to measurement of a flow of fluids, and more particularly to a system and method for metering gas.

### BACKGROUND

Currently, metering of gas entails use of various types of flow sensing devices. For example, mass flow sensing devices measure a mass flow rate (e.g., kilogram/second), and other flow sensing devices may involve vortex-based sensing, which determines a volumetric flow rate of the fluid based on the frequency at which the vortices are formed (or shed). Known flow sensing devices include various disadvantages. For example, mass flow sensing devices determine the mass flow rate of the gas based on an amplitude measurement, and do not provide a direct volumetric flow rate. Although mass flow sensing devices offer the advantage of high sensitivity in a low flow range, the accuracy of such mass flow sensing devices may be adversely impacted by real-world considerations at higher flow rates, such as gas density fluctuations, moisture fluctuations, gas mixture fluctuations, and the like. The vortex-based sensing devices provide a direct volumetric flow measurement, but the measurement is adversely impacted when the flow velocity of the gas is too low for the formation of vortices.

Some known flow sensing devices utilize thermal flow sensors that create temperature gradients to determine the flow rate of the fluid. Such thermal flow sensors typically include a heating element that generates heat that is absorbed by the flowing fluid. Power consumption is a concern for many thermal flow sensors. For example, a flow sensor may constantly operate the heater, even if the measurements of the flow rate are taken at timed intervals. Even if a thermal flow sensor is controlled to provide duty cycling, in which the heater is turned on for a measurement and then turned off until a subsequent measurement, power consumption is still inefficient. For example, the heater consumes power as the heater warms up to reach a designated steady state temperature, and a flow rate measurement is not taken until the heater reaches the steady state temperature. Thus, the energy expelled to warm up the heater is wasted because no flow rate measurement is provided during the warm up period. Japanese patent document JP 2015227819A discloses a thermal flow sensor in which the heater is operated on three different levels of power and temperature, the selection of the mode depending on the operation state of the vehicle in which said sensor is located.

Furthermore, some flow sensing devices are able to measure various flow parameters, such as the ability to measure a mass flow rate and also a volumetric flow rate. The measurements of the different flow parameters may require different heater settings, such as different operational times and different power levels. But, the current flow sensing devices do not adjust the heater settings based on a specific flow parameter that is being measured, so the heater may be operational for a longer period and/or at a higher power level than is necessary, wasting additional energy. Due to the inefficient power consumption, the batteries of some known flow sensing devices may need to be replaced and/or recharged at least once a year, which is costly and troublesome.

### BRIEF DESCRIPTION

In one embodiment, a system is provided for metering gas. The system includes a flow sensor and a controller. The flow sensor is configured to be disposed in a conduit in fluid connection with a flow of a gas through the conduit. The flow sensor includes a heater and at least one temperature sensing element. The flow sensor is configured to generate an electrical output based on the flow of the gas through the conduit. The controller includes one or more processors operatively connected to the flow sensor and configured to control the operation of the heater at multiple measurement intervals. The controller is operable in a pre-measurement mode and multiple measurement modes. The controller in the pre-measurement mode operates the heater at a pre-measurement setting. The controller in the measurement modes operates the heater at corresponding measurement settings that have at least one of increased power levels or longer operating durations relative to the pre-measurement setting of the heater. The controller in the measurement modes is configured to determine a flow rate of the gas based on at least one of an amplitude characteristic or a temporal characteristic of the electrical output of the flow sensor. During each measurement interval, the controller operates in the pre-measurement mode and is configured to determine whether or not to operate in any of the measurement modes during a current measurement interval based on a dynamic response in the electrical output of the flow sensor to the heater operating at the pre-measurement setting, wherein said dynamic response represents the electrical output of the flow sensor as the heater warms up and cools down.

In another embodiment, a method is provided for metering gas. The method includes pulsing a heater of a flow sensor at a pre-measurement setting. The flow sensor is disposed in a conduit in fluid connection with a flow of a gas through the conduit. The flow sensor further includes at least one temperature sensing element and is configured to generate an electrical output based on the flow of the gas through the conduit. The method includes analyzing, using one or more processors, a dynamic response in the electrical output of the flow sensor during the pulsing of the heater, the dynamic response representing the electrical output of the flow sensor as the heater warms up and cools down. The method also includes, responsive to one or more characteristics of the dynamic response being outside of a designated threshold range relative to a stored profile, controlling the heater to operate at a measurement setting that is one of multiple measurement settings, the measurement settings of the multiple measurement settings having at least one of an increased power level or a longer operating duration relative to the pre-measurement setting of the heater.

### DRAWINGS

The inventive subject matter described herein will be better understood from reading the following description of non-limiting embodiments, with reference to the attached drawings, wherein below:
Figure 1 is a schematic diagram of a flow sensing system according to an embodiment;
Figure 2 is a graphical illustration depicting a response of a flow sensor of the flow sensing system in different flow regimes of gas flowing through the flow sensing system according to an embodiment;
Figure 3 depicts a graph showing power settings of a heater of the flow sensing system associated with the different flow rate measurement modes described herein according to an embodiment;
Figure 4 is a flow chart of one embodiment of a method for metering gas, such as through a pipeline; and
Figure 5 is a flow chart of one embodiment of a method for performing a full measurement of the flow rate of a gas.

### DETAILED DESCRIPTION

Reference will be made below in detail to example embodiments of the inventive subject matter, examples of which are illustrated in the accompanying drawings. Wherever possible, the same reference numerals used throughout the drawings refer to the same or like parts.

One or more embodiments described herein are directed to a fluid flow sensing system using a thermal flow sensor. The thermal flow sensor is powered by a power supply, such as one or more batteries. In the systems and methods described herein, the flow sensing system is controlled in order to reduce power consumption compared to known flow sensing devices, which increases the operating life of the power supply and/or allows for a smaller power supply relative to power supply components in known flow sensing devices. For example, if the fluid flow sensing system is installed in a gas meter of a residential or commercial building for monitoring the flow rate of gas into the building, a battery of the fluid flow sensing system may have a longer operating life than the same type of battery used with a conventional flow sensing device, resulting in less frequent replacements.

In one or more embodiments, the power consumption of the flow sensing system is reduced by selectively controlling a heater component of the thermal flow sensor. For example, the thermal flow sensor includes at least a heater, one or more heat sensors (e.g., a temperature sensors), and a controller (e.g., one or more processors). The controller controls the operating duration of the heater as well as a power level of the heater at different heater settings based on an operating mode of the controller. In an embodiment, the controller is configured to control a length of time that the heater is active or operational (e.g., duty cycle duration) and a power level of the heater for each flow measurement based on flow characteristics of the fluid flow monitored by the heat sensors while the heater operates at a pre-measurement setting. For example, once the heater is activated from an off-state to operate at the pre-measurement setting, the controller is configured to analyze a dynamic response in the sensor output over time to extract information about the flow rate of the fluid. The controller uses the extracted flow rate information to make several determinations, including which flow measurement mode to employ for measuring the flow rate and which settings to use for the heater. The heater settings include both the power level and the operating duration of the heater. For example, the power settings may be determined such that a sufficient amount of heat is administered for a sufficient duration to be able to generate a satisfactory flow measurement without expending unnecessary energy, in order to reduce power consumption and extend the life of the power supply. The power consumption is reduced relative to a flow rate sensing system that controls the heater to operate at a same power level and duration of time for each measurement, because the set power level and/or duration may exert more energy than is necessary for some measurement modes to yield an accurate flow rate measurement.

When the heater is activated from a deactivated state to an operational state, the temperature of the heater initially increases over time towards a steady state or equilibrium condition. At the steady state condition, the heat emitted by the heater (also referred to as a temperature of the heater) may be relatively constant over time. For example, at the steady state condition, the heat emitted by the heater may not fluctuate more that 2%, more than 5%, or more than 10%. Typically, flow rate measurements are made after the heater has been active for a designated duration at a specified power level, so the energy expelled during a warm-up period of the heater (and during a subsequent cool-down period after power to the heater is cut off) is not used (directly) for generating a flow rate measurement.

In one or more embodiments disclosed herein, the controller is configured to conserve power consumption while metering a flow of a gas through a conduit by operating in both a pre-measurement mode and multiple measurement modes. During each measurement interval, the controller initially operates in the pre-measurement mode such that the controller operates the heater at the pre-measurement setting. The pre-measurement setting of the heater may include one or more pulses in which the heater is activated and deactivated in quick succession. The controller analyzes the dynamic response of the electrical output of the flow sensor to the heater operating at the pre-measurement setting to extract pre-sensing information. The pre-sensing information is used by the controller to determine, first of all, whether or not to proceed with a full measurement of the flow rate during the current measurement interval. For example, if one or more characteristics of the dynamic response are within a designated threshold range of a stored profile, such as a dynamic response profile recorded during a preceding measurement interval, the controller determines that the flow rate is relatively unchanged from the stored profile and may not perform a full flow rate measurement during the current measurement interval. By skipping the full measurement, the duration that the heater operates during the current measurement interval is reduced compared to the length of time that the heater is active when performing a full flow rate measurement, which reduces power consumption relative to flow rate sensing systems that operate heaters for constant durations to obtain full flow rate measurements at each measurement interval.
If, on the other hand, the controller decides to perform a full flow rate measurement based on the analysis of the dynamic response of the flow sensor to the heater operating at the pre-measurement setting, the controller uses the extracted pre-sensing information to determine which of multiple measurement modes to employ in determining the flow rate. For example, the flow sensing system described herein has multiple measurement modes, including an amplitude-based calorimetric measurement mode for low flow rates, a temporal or frequency-based vortex shedding measurement mode for higher flow rates, and a cross-calibration measurement mode in which both amplitude-based and frequency-based measurements are made. The analysis of the dynamic response of the flow sensor during the pre-measurement mode may indicate whether the flow rate of the fluid is within a low flow rate range, such that the flow rate should be measured using the calorimetric measurement mode, is within a high flow rate range, such that the flow rate should be measured using the vortex shedding measurement mode, or is in an overlap region of the low and high flow rate ranges, such that the flow rate should be measured using the cross-calibration measurement mode. By determining which measurement mode to use prior to generating a full measurement of the flow rate, the heater settings and controller calculations in the upcoming full flow rate measurement can be customized for the selected measurement mode. Thus, fewer calculations are performed and/or the heater consumes less power than some known flow sensing devices that expend sufficient power each measurement interval to perform the flow rate measurement using all available modes and subsequently decide which calculated measurement is more accurate. The flow sensing system disclosed herein may conserve power by avoiding the expenditure of energy on unnecessary types of flow measurements and by limiting the power supplied to the heater to a power level and an operating duration that is necessary for the selected flow measurement. Known sensing devices typically error on the safe side and operate the heater according to a worst-case scenario, which is a higher power level and/or operating duration than is necessary for some, if not most, flow rates of the metered gas.

The flow sensing systems and methods disclosed herein are useful for battery-operated applications, in which the power source is isolated from an electrical network or grid. In an example, the flow sensing system may be installed in a natural gas meter. A battery in the natural gas meter for powering the electronics may have a longer operational life due to the flow sensing systems and methods disclosed herein, which reduces the cost for replacing the battery. Optionally, instead of extending the battery life, the battery of the gas meter may be replaced with a less costly battery that is able to achieve a comparable battery life as the more expensive battery due to the power conservation provided by the flow sensing systems and methods disclosed herein.

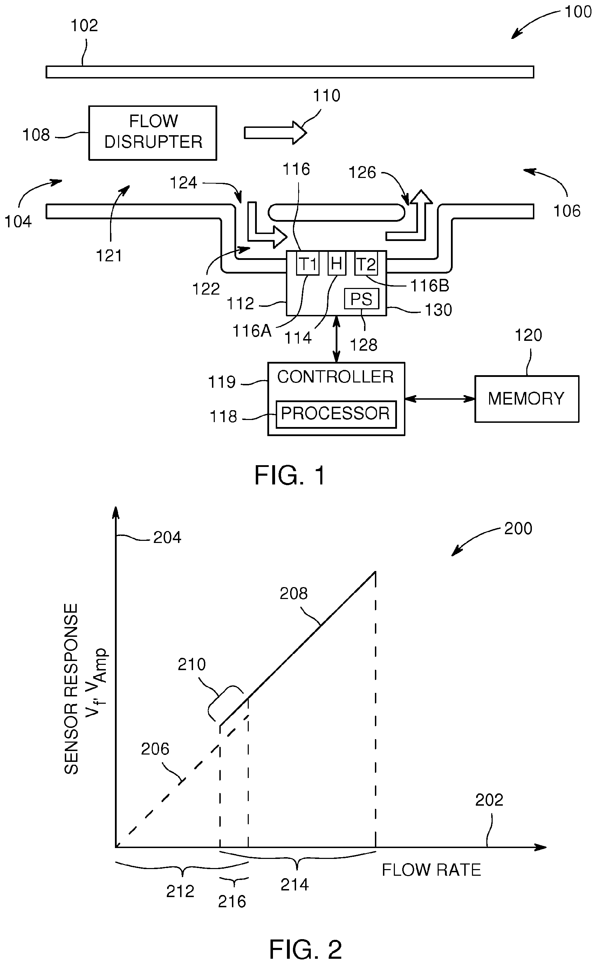

Figure 1 is a schematic diagram of a flow sensing system 100 according to an embodiment. The flow sensing system 100 may be used to measure or meter a flow of gas. The term "meter" as used herein may be used to refer to determining one or more flow parameters of the gas including, but not limited to, a mass flow rate, a volumetric flow rate, an accumulated volume of the gas, a cumulative gas volume per a determined time unit, or combinations thereof. The flow sensing system 100 includes a conduit 102, a flow disrupter 108 disposed within the conduit 102, a flow sensor 112, and one or more processors 118.

The conduit 102 has an input port 104 and an output port 106. The conduit 102 is configured to allow flow of a gas therethrough between the input port 104 and the output port 106. The gas flows into the conduit 102 through the input port 104 and out of the conduit 102 through the output port 106. Thus, the gas flows in a direction 110 (represented by arrow 110) from the input port 104 to the output port 106. The conduit 102 may be a section of a pipe or a housing (not shown). For example, the conduit 102 may be coupled to a pipeline that supplies the gas through the conduit 102, and the flow sensing system 100 is configured to meter the gas flowing through the pipeline. The pipeline may be part of a residential or industrial setup for supplying a gas, such as natural gas, to a building. For example, the flow sensing system 100 may be installed in a gas meter affiliated with a residential or commercial building, in order to meter the gas supplied to the building. Alternatively, the flow sensing system 100 may be used in other applications for measuring the flow of gas, such as in an industrial process and/or product that utilizes a gas.

The conduit 102 defines a primary channel 121 between the input port 104 and the output port 106. Optionally, the conduit 102 may also include a by-pass channel 122 in fluid connection with the primary channel 121. The by-pass channel 122 has an inlet 124 and an outlet 126 downstream of the inlet 124, such that the outlet 126 is located more proximate to the output port 106 than the proximity of the inlet 124 to the output port 106. At least some gas flowing through the primary channel 121 enters the by-pass channel 122 through the inlet 124 and exits the by-pass channel 122, returning to the primary channel 121, through the outlet 126.

The flow disrupter 108 is disposed within the conduit 102 and is configured to impart disturbances (e.g., vortices, eddies, swirls, pressure fluctuations, velocity fluctuations, etc.) to the gas when the flow rate is sufficiently high. In the illustrated embodiment, the flow disrupter 108 is disposed in the primary channel 121. Alternatively, the flow disrupter 108 may be located in the by-pass channel 122. The flow disrupter 108 is located upstream of the inlet 124 of the by-pass channel 122 in the illustrated embodiment, but may be located downstream of the inlet 124 in an alternative embodiment. The flow disrupter 108, although shown schematically in Figure 1, may have one of various shapes, including a blunt flow disrupter, a planar flow disrupter, a rectangular flow disrupter, combinations thereof, or the like. In other embodiments, the flow disrupter can be an active actuator driven by an input signal. For example, the flow disrupter 108 may be a rod that extends across the primary channel 121 between opposing side walls of the conduit 102. The flow disrupter 108 optionally may include a first segment separated from a second segment by a gap. The conduit 102 may include more than one flow disrupter 108 therein.

The flow sensor 112 is held by the conduit 102 in fluid connection with the gas. In an embodiment, the flow sensor 112 is held in or along the by-pass channel 122 and is exposed to the gas within the by-pass channel 122. Alternatively, the flow sensor 112 may be held in or along the primary channel 121. The flow sensor 112 is configured to generate an electrical signal (e.g., a voltage signal) responsive to a flow characteristic of the gas flowing through the conduit 102. The flow characteristic may be a mass flow rate of the gas, a frequency of disturbances in the gas caused by the flow disrupter 108, or the like, as described in more detail herein. The electrical signal generated by the flow sensor 112 may have an amplitude characteristic and a temporal (or frequency) characteristic. The amplitude characteristic may include, but is not limited to, a magnitude, a scale, a breadth, or combinations thereof. Similarly, the temporal characteristic may include, but is not limited to, a period, a frequency, a zero crossing rate, a phase, a time-resolved demodulation, a frequency-resolved demodulation of the signal, or combinations thereof. Thus, as described in more detail herein, the flow sensor 112 may be a combination mass flow rate sensor and volumetric flow rate sensor.

The flow sensor 112 is a thermal flow sensor and includes a heater 114 that is configured to transfer heat to the gas that flows past the heater 114. The flow sensor 112 further includes at least one temperature sensing element 116 that monitors the temperature of the gas that flows past the respective temperature sensing element 116. The heater 114 may be or include a resistor (e.g., a resistive element) that is configured to emit heat in response to receiving a current. Each temperature sensing element 116 may be a thermocouple, a thermistor, a thermopile, or the like. In the illustrated embodiment, the flow sensor 112 includes a first temperature sensing element 116A and a second temperature sensing element 116B. The first temperature sensing element 116A is disposed upstream of the heater 114 based on the flow direction 110, and the second temperature sensing element 116B is disposed downstream of the heater 114. The arrangement of the temperature sensing elements 116A, 116B relative to the heater 114 allows for the flow sensor 112 to detect a temperature gradient between the first and second temperature sensing elements 116A, 116B based on the heat provided to the gas from the heater 114. The temperature gradient is affected by the flow rate of the gas through the conduit 102. For example, a greater flow rate of gas may result in a greater temperature gradient. The temperature gradient is detected based on respective voltages provided by the two temperature sensing elements 116A, 116B.

In an embodiment, the flow sensor 112 is a micro-electro-mechanical (MEMS) sensor. For example, the heater 114 and the temperature sensing elements 116A, 116B are disposed on a compact silicon die. For example, the sensor area of the flow sensor 112 optionally may be less than 1 mm², such as 0.2x0.3 mm. The heater 114 may be a micro-heater. Alternatively, the flow sensor 112 may be another type of sensor that measures the rate at which a fluid, such as gas, flows.

The flow sensor 112 further includes a power source 128 that provides an electrical power (e.g., a current) for operating the flow sensor 112. For example, the power source 128 provides power to the heater 114 and the temperature sensing elements 116A, 116B. The power source 128 may include one or more batteries, such that the power source 128 has a limited supply of electrical energy stored in the one or more batteries. In an embodiment, the power source 128 is held adjacent to the heater 114 and the temperature sensing elements 116A, 116B within or on a common housing 130 of the flow sensor 112. Thus, the power source 128 may be relatively small. Alternatively, the power source 128 may be remote from the housing 130 and electrically connected to the heater 114 and the temperature sensing elements 116A, 116B through a conductive and/or inductive path, such as one or more electrical wires. For example, the power source 128 may be connected to the controller 119, and the controller 119 may supply power from the power source 128 to the flow sensor 112.

The flow conduit 102, the bypass channel 122, the flow disrupter 108, and/or the flow sensor 112 may be configured to have a geometrical relationship based on respective dimensions and relative positions thereof. The geometrical relationship between the flow conduit 102, the bypass channel 122, the flow disrupter 108, and/or the flow sensor 112 may be selected to allow for establishing a phase difference between a pressure of the gas flow at the inlet 124 of the by-pass channel 122 and a pressure of the gas flow at the outlet 126 of the by-pass channel 122. Furthermore, a specific phase difference value may be targeted such that the phase difference results in an increased signal-to-noise ratio of the electrical signal generated by the flow sensor 112. For example, the phase difference may be selected such that the flow pressure at the inlet 124 of the by-pass channel 122 and the flow pressure at the outlet 126 of the by-pass channel 122 are substantially out-of-phase relative to one another, which may aid in suppressing common mode noise effects in the electrical signal generated by the flow sensor 112.

The one or more processors 118 of the flow sensing system 100 are operatively connected to the flow sensor 112 and provide various arithmetic and control functions for the flow sensing system 100. The one or more processors 118 may define or comprise a portion of a controller 119. The controller 119 may include or be comprised of a single processor or multiple processors that interact with one another and the other components of the flow sensing system 100. The controller 119 represents hardware circuitry that includes and/or is connected with the one or more processors 118 (e.g., microprocessors, field programmable gate arrays, integrated circuits, or other electronic logic-based devices). Thus, the description of the controller 119 below may be understood to also refer to the one or more processors 118 that comprise the controller 119. The controller 119 may include and/or be communicatively connected with at least one memory 120, such as a computer hard drive, a computer server, random access memory (RAM), read-only memory (ROM), non-volatile memory (e.g., flash memory), or the like. For example, the memory 120 may store software-based instructions for the controller 119, and the controller 119 may execute the instructions. The memory 120 may also store measurement data acquired from the flow sensor 112 or from a remote source.

The controller 119 controls the heater 114 of the flow sensor 112, such as the activation and deactivation of the heater 114 and the heater settings. For example, the controller 119 may communicate control signals to the heater 114 to activate and deactivate the heater 114. Furthermore, the controller 119 communicatively receives the electrical signals generated by the flow sensor 112 in response to the flow characteristics of the gas in the conduit 102. The controller 119 may communicate with the flow sensor 112 via an electronic bus (not shown). The controller 119 is further configured to determine a flow rate of the gas through the conduit 102 based on the electrical signals that are received. The controller 119 may determine the flow rate based on one or more calculations. For example, the one or more processors 118 of the controller 119 may include an arithmetic-logic unit (ALU), which is a digital circuit used to perform arithmetic and logic operations. The ALU may be utilized to calculate the flow rate through the conduit 102 based on one or more characteristics of the electrical signals from the flow sensor 112, such as amplitude characteristics, temporal characteristics, or both amplitude and temporal characteristics of the electrical signals.

In one example, the one or more processors 118 may be signal processors. The one or more processors 118 may be configured to perform a spectral analysis of the electrical signal received from the flow sensor 112. Some examples of signal processing techniques that may be implemented by the one or more processors 118 to perform the spectral analysis may include, but are not limited to, a Fast Fourier Transform (FFT), the heterodyne principle, a phase-locked loop, or combinations thereof.

In order to meter the gas that flows through the conduit 102, the flow sensing system 100 generates periodic flow rate measurements at regular intervals, such as every half second, every second, or every two seconds. Since the flow rate measurements are periodic, the controller 119 may duty cycle the heater 114 to conserve energy by activating the heater 114 for a flow rate measurement and then deactivating the heater 114 until a subsequent flow rate measurement. The controller 119 controls the activation and the deactivation of the heater 114, including the duration of time that the heater 114 is operating (e.g., activated) for each flow rate measurement and the duration of time that the heater 114 is not operating (e.g., deactivated) between each flow rate measurement. As used herein, the heater 114 is operating when the heater 114 is actively receiving an electrical current, and the heater 114 is not operating when the heater 114 is not receiving an electrical current.

Figure 2 is a graphical illustration 200 depicting a response of the flow sensor 112 (shown in Figure 1) in different flow regimes of gas flowing through the flow sensing system 100 (Figure 1) according to an embodiment. Figure 2 is explained in conjunction with the elements of the flow sensing system 100. The x-axis 202 of the graphical illustration 200 represents a flow rate and the y-axis 204 represents a magnitude (*Vₐₘₚ*) and a frequency (*V_{f}*) of an electrical voltage signal generated by the flow sensor 112. The magnitude (*Vₐₘₚ*) and the frequency (*V_{f}*) of the voltage signal generated by the flow sensor 112 may be referred to as a sensor response. As depicted in the graphical illustration 200, a first flow regime may be represented by a curve 206 and a second flow regime may be represented by a curve 208. It may be noted that the curves 206 and 208 are illustrated as straight lines for purposes of simplicity of illustration and should not be interpreted as an indication of a linear relationship between the flow rate 202 and the sensor response 204.

The first flow regime, represented by the curve 206, has a low flow range 212. The range 212 of flow rates in the first flow regime may be from 0.01-10% of a measurable flow rate scale. In one embodiment, the range 212 of flow rates in the first flow regime may be from about 0.01 liters per minute (L/min) to about 10 L/min. In another embodiment, the range 212 of flow rates may be higher than 10 L/min. The first flow regime is characterized by substantially laminar fluid flow through the conduit 102 due to the low flow rate of the gas. The flow rate of the gas is too low for the flow disrupter 108 to impart disturbances, such as vortices, in the gas flow. The gas flow in the first flow regime may have substantially steady pressure at the inlet 124 and/or outlet 126 of the by-pass channel 122 (or a steady flow through the by-pass channel 122).

The second flow regime, represented by the curve 208, has a high flow range 214 that is higher than the low flow range 212 of the first flow regime. For example, although the ranges 212, 214 overlap in an overlap range 216, the high flow range 214 is inclusive of at least some flow rates that are greater than all of the flow rates in the low flow range 212. The high flow range 214 may extend from 5-100% of the measurable flow rate scale. In one embodiment, the range 214 of flow rates in the second flow regime may be from about 3 L/min to about 150 L/min. The low and high flow ranges 212, 214 are not drawn to scale in Figure 2. The second flow regime is characterized by a flow rate that is sufficiently high such that the flow disrupter 108 imparts the disturbances (e.g., vortices and pressure fluctuations) to the gas flow in the conduit 102. The disturbances imparted by the flow disrupter 108 in the second flow regime may cause oscillatory pressure fluctuations at the inlet 124 and/or outlet 126 of the by-pass channel 122. Such oscillatory pressure fluctuations may cause a measurable frequency modulation of the flow of the gas flowing through the by-pass channel 122. For example, the frequency of the vortices may be generally proportional to the flow rate of the gas through the conduit 102.

As described above, the flow sensor 112 is configured to generate an electrical output in response to the flow of the gas flowing in the conduit 102. For example, the electrical output may have a voltage (V) characteristic. In the first flow regime where no vortices are formed, the flow sensor 112 may generate an amplitude response (*Vₐₘₚ*) to the flow of the gas in the conduit 102. The amplitude response is a DC voltage signal having a magnitude related to a mass flow rate (e.g., kilogram/second) of the gas flowing through the conduit 102. The flow sensing system 100 is configured to operate in the mass-based calorimetric measurement mode responsive to determining that the gas flow is in the first flow regime to measure a mass flow rate of the gas. The mass flow rate measurement does not result in a direct volumetric flow rate measurement, but the volumetric flow rate of the gas may be determined with knowledge of the density of the gas. However, the density of the gas may vary substantially depending on various factors associated with the gas, such as the pressure, temperature, gas composition, or combinations thereof. Hence, in the first flow regime, the mass flow rate of the gas may not be a clear, accurate indicator of the volumetric flow rate of the gas. Consequently, a calibration function, described below, may be used to transform the mass flow rate value into a relatively accurate volumetric flow rate value, as described below. As a result of the calibration function, the flow parameters may not be substantially impacted by gas density fluctuations, moisture fluctuations, gas mixture fluctuations, and the like.

In the second flow regime in which vortices are formed in the gas flowing through the flow conduit 102, the flow sensor 112 may generate a temporal or frequency-based response (*V_{f}*) to the flow of the gas in the conduit 102. The temporal response is an alternating current (AC) voltage signal. The frequency of the AC voltage signal may be proportional to, or directly related to, the volumetric flow rate (e.g., liter/second) of the gas flowing through the conduit 102. The flow sensing system 100 is configured to operate in the frequency-based vortex shedding measurement mode responsive to determining that the gas flow is in the second flow regime to measure a volumetric flow rate of the gas. To summarize, in the first flow regime, no vortices are formed in the gas flowing in the conduit 102, and the flow sensor 112 may generate a DC voltage signal having amplitude characteristics *(Vₐₘₚ),* such as magnitude. In the second flow regime, the vortices are formed in the gas flowing through the conduit 102, and the flow sensor 112 generates an AC voltage signal having temporal characteristics (*V_{f}*)*,* such as frequency.

The first and the second flow regimes overlap one another at an overlap region 210. The overlap region 210 indicates a third flow regime. The third flow regime may be characterized by a range 216 of flow rates in which both the temporal and the amplitude characteristics of the electrical output generated by the flow sensor 112 are measurable.

For example, the gas flow in the range 216 of flow rates includes vortices formed in the gas, so an AC voltage signal may be generated by the flow sensor 112. The gas flow in the range 216 also allows the measurement of the magnitude of an amplitude characteristic, so a DC voltage signal may also be generated.

Gas flow in the third flow regime may be utilized to develop a calibration function that represents a relationship between the volumetric flow rate determined based on the frequency (*V_{f}*) of the voltage signal and the mass flow rate determined based on the amplitude (*Vₐₘₚ*) of the voltage signal. Since the first flow regime lacks vortices and therefore is not feasible for determining the volumetric flow rate of the gas, the calibration function may allow the flow sensing system 100 to obtain the volumetric flow rate in the first flow regime as well as in the third flow regime.

In an embodiment, the calibration function may be developed by the flow sensing system 100 determining both the volumetric flow rate of the gas and the mass flow rate of the gas for different flow rates in the range 216 of the third flow regime. The controller 119 determine both the volumetric flow rate and the mass flow rate based on the frequency (*V_{f}*) and the amplitude *(Vₐₘₚ),* respectively, of the voltage signal generated by the flow sensor 112 for different values of the flow rates corresponding to the third flow regime. The controller 119 may develop the calibration function based on the values of the volumetric flow rates and the mass flow rates, such as by determining a correlation between the volumetric flow rates and the mass flow rates. The calibration function may be used to convert or transform mass flow rates for gas flow in the first flow regime to volumetric flow rates. Thus, when the controller 119 operates in the calorimetric measurement mode to measure the flow rate, the controller 119 may utilize the calibration function, not the density of the gas, to determine the volumetric flow rate. As a result, gas density fluctuations would not affect the measured flow rate.

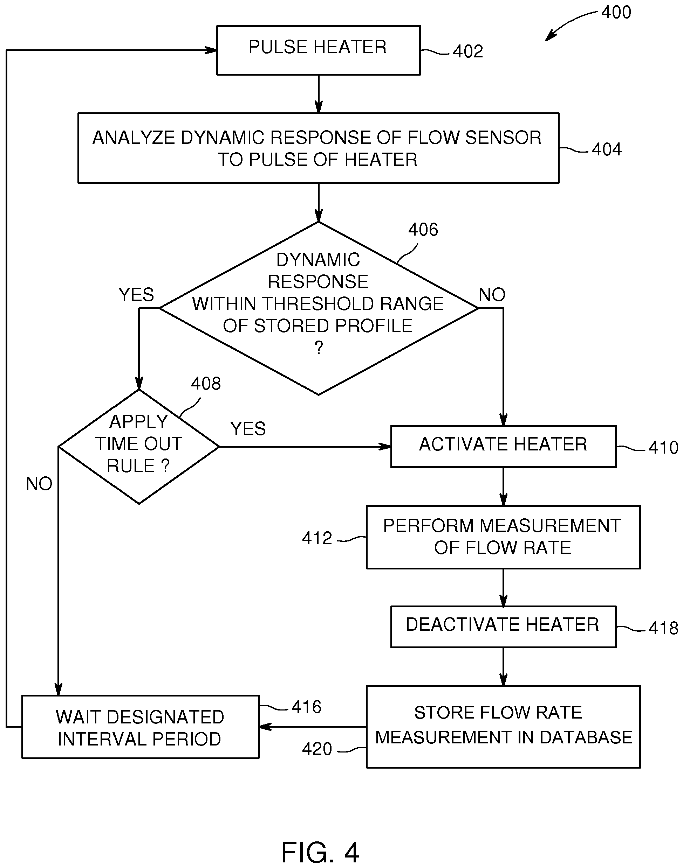

Referring now back to Figure 1, the controller 119 of the flow sensing system 100 according to one or more embodiments is configured to control the flow sensor 112, including the heater 114 thereof, in order to determine flow rate measurements of the gas flow in the conduit 102 at regular measurement intervals, while also conserving power consumption relative to known thermal gas sensing systems. The reduced power consumption may reduce power supply costs by extending the operating life of the power source 128 and/or allowing a smaller, cheaper power source 128 to be utilized. The operations of the controller 119 described below will be described in more detail with reference to the method 400 shown in Figure 4.

In an embodiment, during each a measurement interval, the controller 119 initially operates in the pre-measurement mode. The controller 119 in the pre-measurement mode may pulse the heater 114 such that the heater 114 is activated and deactivated at least once such that the heater 114 is active and operating for a duration that is shorter than respective operating durations used for performing full flow rate measurements of the gas. The heater 114 optionally may also operate at a lower power level relative to the power levels used for performing the full flow rate measurements. The controller 119 in the embodiments disclosed herein utilizes the pulsing activity of the heater 114 to extract information that the controller 119 uses to determine whether or not to conduct a subsequent flow rate measurement during the current measurement interval, and, if so, how to conduct the flow rate measurement without wasting electrical energy. The controller 119 extracts the information based on a dynamic response in the electrical output generated by the flow sensor 112 while the heater 114 is pulsed. The dynamic response of the flow sensor 112 includes a ramping rate of the electrical output of the sensor 112 (as the heater 114 warms up during a pulse), a cooling rate of the electrical output (as the heater 114 cools down during a pulse), and/or an entire dynamic response profile during the pulsing activity. The analysis of the dynamic response during the pre-measurement mode may provide a snap-shot of the temperature gradient across the flow sensor 112 and optionally may be used to extrapolate a rough estimate or general indication of the flow rate of the gas while expending less energy than is required to perform a full flow rate measurement according to one of the measurement modes.

In an embodiment, the controller 119 analyzes the dynamic response in the electrical output of the flow sensor 112 during the pre-measurement mode by comparing one or more characteristics of the dynamic response to a stored profile. The stored profile may be stored in the memory 120 or another storage device. The stored profile may be a dynamic response in the electrical output of the flow sensor 112 that is recorded from a prior measurement interval, such as the immediately preceding measurement interval. Alternatively, the stored profile may be data received from a remote source. For example, the stored profile may include electrical characteristics that are associated with the flow rate regimes and/or the measurement modes (e.g., the calorimetric, the vortex shedding, and the cross-calibration measurement modes). Comparing the dynamic response of the flow sensor 112 during the current measurement interval to the stored profile may allow the controller 119 to determine if there has been a substantial (e.g., non-negligible) change in the electrical output of the flow sensor 112 between the previous measurement interval and the current measurement interval.

In an embodiment, if the one or more characteristics of the dynamic response of the flow sensor 112 during the current measurement interval are within a designated threshold range of the stored profile, the controller 119 skips operating in any of the measurement modes during the current measurement interval. Thus, the heater 114 does not operate in any of the measurement settings during the current interval and the controller 119 does not determine a flow rate of the gas, which conserves energy that would have been used to power the heater 114 and the controller 119 during the flow rate measurement that is skipped. If, on the other hand, the one or more characteristics of the dynamic response are outside of the designated threshold range relative to the stored profile, then a substantial change in the flow rate of the gas may have occurred. In response, the controller 119 is configured to operate in one of the measurement modes to measure a flow rate of the gas during the current measurement interval.

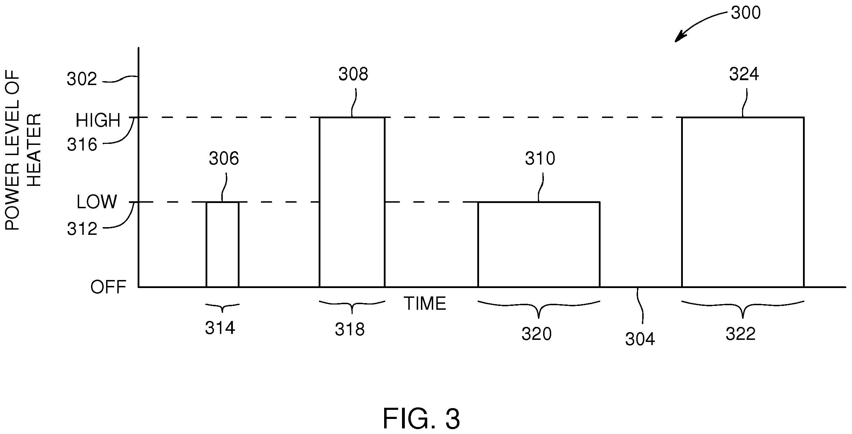

Upon switching to the measurement mode, the controller 119 operates the heater 114 at one of the measurement settings. The measurement settings of the heater 114 include higher power levels and/or operating durations of the heater 114 relative to the pre-measurement setting of the heater 114. The measurement settings of the heater 114 may differ for the different measurement modes, as described below with reference to Figure 3. In an embodiment, in addition to being used for determining whether or not to proceed with a full flow rate measurement during the current interval, the controller 119 also uses the dynamic response of the flow sensor 112 to the pulsing of the heater 114 during the pre-measurement mode to determine which flow measurement mode (e.g., the mass-based calorimetric measurement mode, the frequency-based vortex shedding measurement mode, or the cross-calibration measurement mode) to use for calculating the flow rate of the gas. The controller 119 may compare the one or more characteristics of the dynamic response to one or more stored profiles that are associated with the different measurement modes. For example, the controller 119 may select the calorimetric measurement mode responsive to the dynamic response matching (e.g., being most similar to) a stored profile associated with a dynamic response of a flow sensor to flow of a gas in the low flow range 212 shown in Figure 2. Similarly, the controller 119 may select the vortex shedding measurement mode responsive to the dynamic response matching a stored profile associated with a dynamic response of a flow sensor to flow of a gas in the high flow range 214 (Figure 2), and the controller 119 may select the cross-calibration measurement mode responsive to the dynamic response matching a stored profile associated with a dynamic response of a flow sensor to flow of a gas in the overlap region 216 (Figure 2).

Figure 3 depicts a graph 300 showing power settings of the heater 114 associated with the different flow rate measurement modes described herein according to an embodiment. The y-axis 302 of the graph 300 represents a power level of the heater 114 and the x-axis 304 represents a time, such as an operating time of the heater 114. The graph 300 is a bar graph that includes a bar 306 representative of the pre-measurement setting of the heater 114 associated with the pre-measurement mode; a bar 308 representative of the calorimetric setting of the heater 114 associated with the low flow rate, mass-based calorimetric measurement mode; a bar 310 representative of the vortex shedding setting of the heater 114 associated with the higher flow rate, frequency-based vortex shedding measurement mode; and a bar 324 representative of the cross-calibration setting of the heater 114 associated with the cross-calibration measurement mode. The graph 300 is shown for illustration of the concept of how the power settings vary amongst the different modes, and is not meant to be interpreted as exact settings or experimental results.

The pre-measurement setting 306 shown in Figure 300 indicates that the heater 114 is controlled at a low power setting 312 for a first operating duration 314. The pre-measurement setting 306 may represent one or more short-duration pulses of the heater 114. In the calorimetric setting 308, the heater 114 is controlled at a high power setting 316 for a second operating duration 318 in order for the controller 119 to be able to determine a flow rate measurement based on an amplitude characteristic of the electrical output of the flow sensor. In the vortex shedding setting 310, the heater 114 is controlled at the low power setting 312 for a third operating duration 320 to be able to determine a flow rate measurement based on a temporal characteristic of the electrical output of the flow sensor. Furthermore, the heater 114 controlled at the cross-calibration setting 324 operates at the high power level 316 for a fourth operating duration 322. It is noted that the heater 114 at the high power level 316 is greater (e.g., is more intense, generates more heat, and/or consumes more electrical energy) than the heater 114 at the low power level 312, but the high power level 316 may not be the highest power level of the heater 114. In addition, the low power level 312 optionally may not be the lowest power level of the heater 114.

As shown in Figure 3, the heater 114 at the calorimetric setting 308 and at the cross-calibration setting 324 operates at higher power levels than the heater 114 at the pre-measurement setting 306 and the vortex shedding setting 310. The operating durations 320, 322 of the heater 114 at the vortex shedding setting 310 and at the cross-calibration setting 324 are greater than the operating durations 314, 318 of the pre-sensing measurement 306 and the calorimetric sensing mode 308. Optionally, the power level of the heater 114 at the calorimetric setting 308 is the same as the power level of the heater 114 at the cross-calibration setting 324, and/or the operating duration of the heater 114 at the vortex-shedding setting 310 is the same as the operating duration of the heater 114 at the cross-calibration setting 324. Thus, to measure the flow rate in the cross-calibration mode, which involves calculating the flow rate based on both the amplitude and temporal characteristics of the electrical output of the flow sensor, the heater 114 is operated for at least the operating duration 320 of the vortex shedding setting 310 at a power level that is at least the high level 316 of the calorimetric setting 308. In an alternative embodiment, the power level of the heater 114 at the pre-measurement setting 306 is not the same as the power level of the heater 114 at the vortex shedding setting 310, such that the power level at the pre-measurement setting 306 is more or less than the power level at the vortex shedding setting 310.

Figure 3 indicates that operating the heater 114 for performing a flow rate measurement in the calorimetric measurement mode, the vortex shedding measurement mode, or the cross-calibration measurement mode requires significantly more energy than operating the heater 114 in the pre-measurement mode at the pre-measurement setting 306. For example, the areas of the bars 306, 308, 310, 324 may represent the respective energy requirements for operating the heater 114 at the respective heater settings. The areas of the bars 308, 310, 324 representing the three measurement modes are each greater than the area of the bar 306 representing the pre-measurement mode. Thus, if the flow sensing system 100 is able to skip a full measurement based on the dynamic response of the flow sensor to the heater 114 operating at the pre-measurement setting 306, then the flow sensing system 100 may conserve energy that would have been used to perform the flow rate measurement. Furthermore, the areas of the bars 308, 310 representing the calorimetric mode and the vortex shedding mode, respectively, are both less than the area of the bar 324 representing the cross-calibration mode. Thus, even if the controller 119 performs a flow rate measurement, the controller 119 may still conserve power (without sacrificing accuracy) if the controller 119, based on the analysis of the dynamic response of the flow sensor to the heater 114 operating at the pre-measurement setting 306, decides to operate in the calorimetric measurement mode or the vortex shedding measurement mode as opposed to the cross-calibration mode.

In an alternative embodiment, the heater 114 at the pre-measurement setting 306 may operate at a power level that is equal to or greater than the power level of one or more of the measurement settings 308, 310, 324, and at an operating duration that is significantly shorter than the operating durations of the measurement settings 308, 310, 324. Thus, due to the shorter operating duration, operating the heater 114 at any of the measurement settings 308, 310, 324 may still require more energy than operating the heater 114 at the pre-measurement setting 306.

Figure 4 is a flow chart of one embodiment of a method 400 for metering gas, such as through a pipeline. The method 400 is described in accordance with the flow sensing system 100 shown in Figure 1. For example, at least some of the steps of the method 400 may be performed by the controller 119 (e.g., including the one or more processors 118). The method 400 may be performed during each measurement interval for metering the flow rate of the gas. At 402, the heater 114 is pulsed. The controller 119 operates in the pre-measurement mode to pulse the heater 114. The pulsing may include activating the heater 114 and then deactivating the heater 114 after a relatively short operating duration, such as the operating duration 314 shown in Figure 3. In each measurement interval, the heater 114 may be pulsed one or more times. The controller 119 may pulse the heater 114 by transmitting a control signal to the flow sensor 112 and/or heater 114.

At 404, a dynamic response in the electrical output of the flow sensor 112 to the pulse of the heater 114 is analyzed. The dynamic response represents the electrical output of the flow sensor 112 as the heater 114 warms up or ramps up, as the heater 114 cools down, or over the entire duration of the pulse. The analysis may include comparing all or parts of the dynamic response to a stored profile that is stored in the flow sensing system 100 (e.g., in the memory 120). The stored profile may be a dynamic response profile that is measured by the flow sensor 112 during a prior measurement interval, such as a response profile of the electrical output of the flow sensor 112 during an immediately preceding flow rate measurement. The analysis may compare one or more characteristics of the dynamic response, such as a slope, an amplitude, a frequency, a waveform shape, an area under the curve, or the like, to relevant characteristics of the stored profile to determine how well the dynamic response matches or aligns with the stored profile.

At 406, a determination is made whether the dynamic response in the electrical output of the flow sensor 112 to the pulse of the heater 114 is within a designated threshold range of the stored profile. The determination may provide an indication of whether the flow rate of the gas has changed since the preceding measurement interval. The designated threshold range optionally may not be a fixed number or percentage. For example, the designated threshold may vary depending on the measurement mode used to determine the preceding flow rate measurement and/or the estimated flow rate of the gas since the associated uncertainty may be different at different flow rates. For example, the designated threshold range may be plus or minus 3% of a specified characteristic of the stored profile if the stored profile was generated during operation in the calorimetric measurement mode for low flow, and the designated threshold range may be plus or minus 1.5% of the specified characteristic of the stored profile if the stored profile was generated during operation in the vortex shedding measurement mode for higher flow. In another example, the designated threshold range may be a percent similarity of the waveform shape of the dynamic response to a waveform shape of the stored profile. For example, the dynamic response may be determined to be within the threshold range of the stored profile if the waveform shape of the dynamic response differs by no more than 5% from the waveform shape of the stored profile. The analysis and comparison may be performed by the controller 119. If the dynamic response is determined to be within the designated threshold range of the stored profile, then flow of the method 400 continues to 408.

In another embodiment, the dynamic response of the flow sensor 112 to the pulsing of the heater 114 may be used by the controller 119 to estimate a flow rate of the gas. For example, the controller 119 may extrapolate the dynamic response of the flow sensor 112 to the pulse to generate a calibration curve that is used to provide estimated flow rate values. The calibration curve may be generated, for example, by taking an integral of the voltage signal over time (e.g., which is equivalent to the area under the curve) to calculate a flow rate. At 406, the determination may indicate whether the estimated flow rate from the pre-measurement mode is within a designated threshold range of a prior flow rate. The prior flow rate may be from an immediately preceding measurement interval or from a preceding measurement interval in which the controller 119 operated in the measurement mode and determined a full flow rate measurement (as opposed to the estimated flow rate).

At 408, a determination is made whether to apply a time out rule. The time out rule (e.g., step 408) is optional. The time out rule mandates that after a designated number of consecutive measurement intervals in which the dynamic response of the flow sensor 112 is determined to be within the designated threshold range of the stored profile, then the controller 119 should operate in one of the measurement modes and perform a full flow rate measurement without skipping the flow rate measurement. The time out rule may be for quality control to verify that the actual flow rate of the gas has not significantly changed from the stored profile. The designated number of consecutive measurement intervals may be 10 intervals, 20 intervals, 40 intervals, or the like. For example, if the designated number in the time out rule is 20 intervals, then after the twentieth consecutive determination that the dynamic response is within the designated threshold range of the stored profile, the time out rule applies and the flow of the method 400 proceeds to 410 to activate the heater 114 to perform a full flow rate measurement. After the nineteenth consecutive determination, however, the time out rule does not apply and flow of the method 400 continues to 416.

At 416, the flow sensing system 100 waits for a designated interval period until the end of the current measurement interval. The designated interval period may be every half second, every second, every two seconds, or the like. After the interval period has expired, flow of the method 400 returns to 402, and the heater 114 is pulsed again.

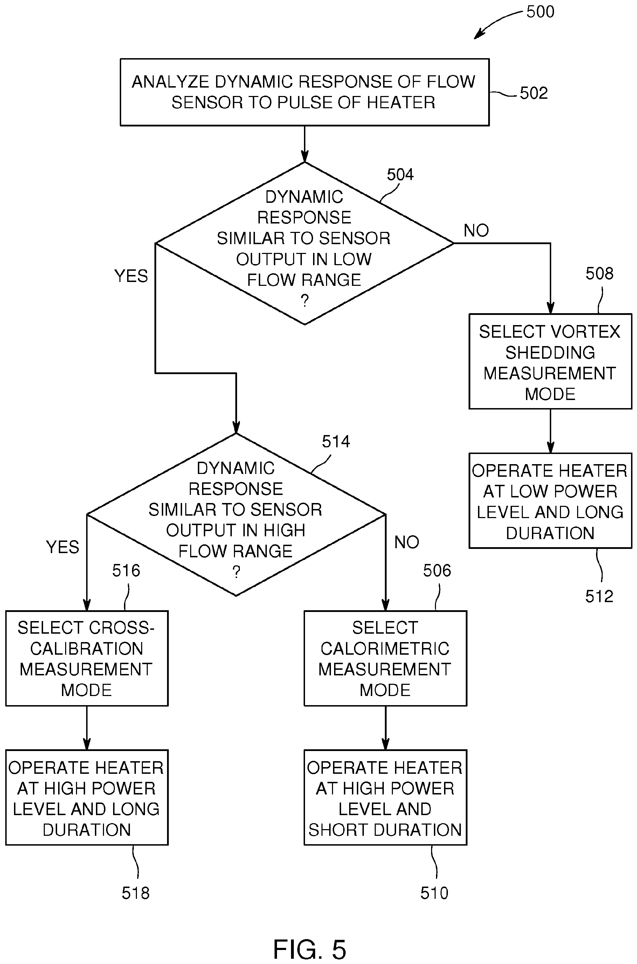

Returning now to 406, if the dynamic response is determined to be outside of the designated threshold range of the stored profile, then flow of the method 400 continues to 410. At 410, the heater 114 is activated at a measurement setting. The measurement setting may be the calorimetric setting 308, the vortex shedding setting 310, or the cross-calibration setting 324 (all shown in Figure 3). Thus, as the method 400 proceeds to 410, the controller 119 may switch from operating in the pre-measurement mode to operating in one of the measurement modes in order to generate a flow rate measurement of the gas. The controller 119 may determine which measurement setting at which to operate the heater 114 based on the analysis of the dynamic response of the flow sensor 112 to the pulse of the heater 114, which is described in more detail in the method 500 shown in Figure 5. At 412, a measurement of the flow rate of the gas is performed. The flow rate measurement may be based on amplitude characteristics and/or temporal characteristics of the electrical output of the flow sensor 112 responsive to the heater 114 operating at the selected measurement setting. In an embodiment, the controller 119 determines which measurement mode (e.g., calorimetric mode, vortex shedding mode, or cross-calibration mode) to employ for measuring the flow rate based on the analysis of the dynamic response of the flow sensor 112 to the pulse of the heater 114, described in more detail in Figure 5 below.

After performing the flow rate measurement, the heater 114 is deactivated at 418. Optionally, at 420, the flow rate value determined by the flow rate measurement at 412 may be stored in a database. For example, the controller 119 may store the flow rate value in a database in the memory 120 or another memory operably coupled to the flow sensing system 100. The stored flow rate value optionally may be accessed and used during one or more subsequent measurement intervals as the stored profile, at least until the flow rate value is replaced by an updated flow rate value. The flow rate value may be stored in the database to create a log or record of the measured flow rates. After storing the flow rate value in the database, flow of the method 400 continues to 416, and the flow sensing system 100 waits for the remainder of the interval period prior to commencing another measurement interval.

In other embodiments, the foregoing steps and/or system elements may be suitably replaced, reordered, or removed, and additional steps and/or system elements may be inserted, depending on the needs of a particular application.

In an alternative embodiment, the heater 114 at 402 is activated but is not deactivated, such that the heater 114 is not pulsed. At 404, the dynamic response of the flow sensor 112 to the activation and operation of the heater 114 is analyzed. The dynamic response may include the response of the flow sensor 112 to the heater 114 in a warming state and/or in a steady state (or equilibrium state) after the heater 114 warms up. In the alternative embodiment, the heater 114 is not activated at 410 because the heater 114 remains in operation. Thus, flow of the method 400 in the alternative embodiment skips 410. Furthermore, in the alternative embodiment, if the dynamic response at 406 is determined to be within the designated threshold range of the stored profile and the time out rule does not apply at 408, then a subsequent step in the method 400 is to deactivate the heater 114 before waiting the designated interval period at 416.

Figure 5 is a flow chart of one embodiment of a method 500 for performing a flow rate measurement of a gas. The method 500 is described in accordance with the flow sensing system 100 shown in Figure 1. The method 500 may be substituted for the steps 410 and 412 in the method 400 shown in Figure 4. At 502, the dynamic response of the flow sensor 112 to the pulse of the heater 114 is analyzed, as in step 404 of the method 400. However, in the method 500, the dynamic response may be analyzed in a different way than in step 404, such as by comparing the dynamic response to different stored data than the stored profile in step 406. For example, the controller 119 in step 502 is configured to analyze the dynamic response to determine which measurement mode to operate in to perform the flow rate measurement. The analysis may involve comparing one or more characteristics of the dynamic response to stored profiles that are associated with sensor outputs at different flow rates. For example, one or more stored profiles may be associated with a sensor output responsive to gas flow in a low flow rate range (such as the range 212 shown in Figure 2), and one or more other stored profiles may be associated with a sensor output responsive to gas flow in a high flow rate range (such as the range 214 shown in Figure 2). Optionally, one or more other stored profiles may be associated with a sensor output responsive to gas flow in a range that overlaps both the low flow rate range and the high flow rate range (such as the overlap range 216 shown in Figure 2). The stored profiles may be determined based on historical data collected and aggregated by the flow sensing system 100 and/or other flow sensing systems. The stored profiles may be associated with the different flow rate ranges based on identifying characteristics of the stored profiles, such as waveform shapes, slopes, frequencies, amplitudes, areas under curves, and the like. The stored profiles may be stored in the memory 120 of the flow sensing system 100.

At 504, a determination is made whether the dynamic response of the flow sensor 112 to the pulse of the heater 114 is similar to a sensor output in the low flow range. The determination may be made by comparing one or more characteristics of the dynamic response of the flow sensor 112 to characteristics of the stored profiles that are associated with the sensor outputs in the different flow rate ranges. In an embodiment, the dynamic response is only compared to the stored profiles associated with the sensor outputs in the low and high flow ranges, and not to a specific stored profile associated with the overlap range. The controller 119 determines the stored profile (associated with one of the flow rate ranges) that is more similar to the dynamic response than the similarity of the other stored profile (associated with the other flow rate range) to the dynamic response. The similarity may be determined based on a percentage difference of one or more of the characteristics of the dynamic response relative to the corresponding characteristics of the different stored profiles. The similarity may be determined based on a threshold value, such as being within 10% of a designated characteristic value. The threshold may vary based on the compared characteristic and which stored profile the dynamic response is being compared to. In an example, if the area under the curve of the dynamic response profile of the flow sensor 112 during the pulse of the heater 114 is 4% different from the stored profile associated with the low flow rate range, and the threshold is 10%, then the dynamic response profile is determined to be similar to the sensor output in the low flow range. If the dynamic response is determined to be similar to the sensor output in the low flow range, then flow of the method 500 proceeds to 514.

At 514, a determination is made whether the dynamic response is also similar to the sensor output associated with a high flow rate range. Continuing the example above and assuming that the threshold for comparing the area under the curve of the dynamic response profile of the flow sensor 112 to the stored profile associated with the high flow rate range is 5%, if the area under the curve of the dynamic response profile is 11 % different from the stored profile, then the dynamic response is determined to not be similar to the sensor output in the high flow range. Thus, since the dynamic response is similar to the stored profile associated with the low flow range but is not similar to the stored profile associated with the high flow range, flow of the method 500 continues to step 506 and the calorimetric measurement mode is selected. If, on the other hand, the dynamic response is determined to be similar to both the stored profile associated with the low flow range and the stored profile associated with the high flow range, then flow of the method 500 proceeds to 516 and the cross-calibration measurement mode is selected. Returning to 504, if the dynamic response is not similar to the stored profile associated with the low flow range, then flow proceeds to 508 and the vortex shedding measurement mode is selected.

In an alternative embodiment, the dynamic response of the flow sensor 112 to the pulse of the heater 114 may be compared to the stored profiles associated with the low flow rate range and the high flow rate range, and also to a stored profile associated with an overlap flow rate range. In such alternative embodiment, the controller 119 may select the measurement mode to use to measure the flow rate based on which of the three stored profiles is most similar to the dynamic response of the flow sensor (e.g., more similar to the dynamic response than the other two stored profiles). For example, if the stored profile associated with the overlap range has an area under the curve (or another designated characteristic) that is closer to the area under the curve of the dynamic response of the flow sensor 112, then the flow of the method 500 may continue to 516 to select the cross-calibration measurement mode.

Returning now to the method 500, if the calorimetric measurement mode is selected at 506, then flow continues to 510 and the heater 114 is operated at the calorimetric setting that consists of a high power level and a short duration. The controller 119 in the calorimetric measurement mode is configured to determine a flow rate of the gas based on an amplitude characteristic of the electrical output of the flow sensor 112 while the heater 114 operates at the calorimetric setting. Alternatively, if the vortex shedding measurement mode is selected at 508, then flow proceeds to 512 and the heater 114 is operated at the vortex shedding setting that consists of a low power level and a long duration. The "low" and "high" power levels and "long" and "short" durations are used merely as relative terms. Thus, the low power level need not be the lowest power level of the heater 114. The controller 119 in the vortex shedding measurement mode is configured to determine a flow rate of the gas based on a temporal characteristic of the electrical output of the flow sensor 112 while the heater 114 operates at the vortex shedding setting. Furthermore, if the cross-calibration measurement mode is selected at 516, then flow continues to 518 and the heater 114 is operated at the cross-calibration setting that consists of the high power level and the long duration. Example embodiments of the calorimetric, vortex shedding, and cross-calibration settings of the heater 114 are illustrated in Figure 3. The controller 119 in the cross-calibration measurement mode is configured to determine a flow rate of the gas based on both the amplitude characteristic and the temporal characteristic of the electrical output of the flow sensor 112 while the heater 114 operates at the cross-calibration setting. For example, in the cross-calibration mode, the controller 119 performs both the high flow rate measurement and the low flow rate measurement, and the high flow rate measurement is used to correct errors or inaccuracies in the low flow rate measurement.

Thus, the flow sensing system 100 described herein is configured to reduce power consumption by extracting information about the flow rate of the gas by pulsing the heating element at a low power level and a short duration, and using that information to determine whether to perform a flow rate measurement. The information gleaned from pulsing the heater can also be used to determine which measurement mode to use to measure the flow rate, such as a measurement mode for low flow rates, a measurement mode for high flow rates, or a measurement mode for flow rates that overlap the low and high flow rate ranges. By determining which measurement mode to use in advance, the heater may be controlled based on the selected measurement mode which avoids operating the heater at unnecessarily high power levels and durations, conserving electrical energy and extending the operable life of the power source that supplies power to the flow sensing system 100. In an embodiment, a system (e.g., for metering gas) includes a flow sensor and a controller. The flow sensor is configured to be disposed in a conduit in fluid connection with a flow of a gas through the conduit. The flow sensor includes a heater and at least one temperature sensing element. The flow sensor is configured to generate an electrical output based on the flow of the gas through the conduit. The controller includes one or more processors operatively connected to the flow sensor and configured to control the operation of the heater at multiple measurement intervals. The controller is operable in a pre-measurement mode and multiple measurement modes. The controller in the pre-measurement mode operates the heater at a pre-measurement setting. The controller in the measurement modes operates the heater at corresponding measurement settings that have at least one of increased power levels or longer operating durations relative to the pre-measurement setting of the heater. The controller in the measurement modes is configured to determine a flow rate of the gas based on at least one of an amplitude characteristic or a temporal characteristic of the electrical output of the flow sensor.

Optionally, during each measurement interval, the controller in the pre-measurement mode activates and deactivates the heater in one or more pulses and analyzes a dynamic response in the electrical output of the flow sensor during the one or more pulses.

According to the invention, during each measurement interval, the controller operates in the pre-measurement mode and is configured to determine whether or not to operate in any of the measurement modes during a current measurement interval based on a dynamic response in the electrical output of the flow sensor to the heater operating at the pre-measurement setting.

According to the invention, the controller in the pre-measurement mode is configured to analyze a dynamic response in the electrical output of the flow sensor to the heater operating at the pre-measurement setting. Responsive to one or more characteristics of the dynamic response being within a designated threshold range relative to a stored profile, the controller is configured to not operate in any of the measurement modes during the current measurement interval.

Optionally, the one or more characteristics of the dynamic response include at least one of an amplitude, a frequency, a slope, a waveform shape, or an area under a curve of the dynamic response of the electrical output.

Optionally, the controller in the pre-measurement mode is configured to analyze a dynamic response in the electrical output of the flow sensor to the heater operating at the pre-measurement setting. Responsive to the one or more characteristics of the dynamic response being outside of the designated threshold range relative to the stored profile, the controller is configured to operate in one of the measurement modes during the current measurement interval to determine the flow rate of the gas based on the electrical output of the heater while the heater operates at the corresponding measurement setting that is associated with the one measurement mode.

Optionally, the measurement modes include a calorimetric mode, a vortex shedding mode, and a cross-calibration mode. During each measurement interval, the controller initially operates in the pre-measurement mode and is configured to determine whether to subsequently operate in the calorimetric mode, the vortex shedding mode, or the cross-calibration mode based on a dynamic response in the electrical output of the flow sensor to the heater operating at the pre-measurement setting.

Optionally, the controller in the calorimetric mode operates the heater for a first operating duration. The controller in the vortex shedding mode and the cross-calibration mode operates the heater for respective operating durations that are longer than the first operating duration.

Optionally, the controller in the vortex shedding mode operates the heater at a first power level. The controller in the calorimetric mode and the cross-calibration mode operates the heater at respective power levels that are higher than the first power level.

Optionally, the at least one temperature sensing element includes a first temperature sensing element and a second temperature sensing element. The first temperature sensing element is disposed upstream of the heater in a direction of the flow of the gas through the conduit. The second temperature sensing element is disposed downstream of the heater in the direction of the flow of the gas.

Optionally, the system further includes a flow disrupter configured to be disposed in the conduit. The flow disrupter is configured to impart disturbances to the flow of the gas through the conduit.

Optionally, the conduit defines a primary channel and a by-pass channel in fluid connection with the primary channel. The flow disrupter is disposed in the primary channel. The flow sensor is disposed along the by-pass channel.

Optionally, the flow sensor is a micro-electro-mechanical (MEMS) sensor.

In another embodiment, a method (e.g., for metering gas) includes pulsing a heater of a flow sensor at a pre-measurement setting. The flow sensor is disposed in a conduit in fluid connection with a flow of a gas through the conduit. The flow sensor further includes at least one temperature sensing element and is configured to generate an electrical output based on the flow of the gas through the conduit. The method includes analyzing, using one or more processors, a dynamic response in the electrical output of the flow sensor during the pulsing of the heater. The method also includes, responsive to one or more characteristics of the dynamic response being outside of a designated threshold range relative to a stored profile, controlling the heater to operate at a measurement setting that has at least one of an increased power level or a longer operating duration relative to the pre-measurement setting of the heater.

Optionally, the method further includes determining a flow rate of the gas based on at least one of an amplitude characteristic or a temporal characteristic of the electrical output of the flow sensor responsive to the heater operating at the measurement setting.

Optionally, responsive to the one or more characteristics of the dynamic response being within the designated threshold range relative to the stored profile, the method further includes controlling the heater to remain in a deactivated state for a remainder of a measurement interval without controlling the heater at the measurement setting during the measurement interval.

Optionally, the measurement setting of the heater is one of a calorimetric setting, a vortex shedding setting, or a cross-calibration setting. The method further includes determining whether to operate the heater at the calorimetric setting, the vortex shedding setting, or the cross-calibration setting based on the analysis of the dynamic response of the flow sensor during the pulsing of the heater.

Optionally, the heater at the calorimetric setting is controlled to operate for a first operating duration. The heater at the vortex shedding setting and the cross-calibration setting is controlled to operate for respective operating durations that are longer than the first operating duration.

Optionally, the heater at the vortex shedding setting is controlled to operate at a first power level. The heater at the calorimetric setting and the cross-calibration setting is controlled to operate at respective power levels that are higher than the first power level.

Optionally, the at least one temperature sensing element of the flow sensor includes a first temperature sensing element and a second temperature sensing element. The first temperature sensing element is disposed upstream of the heater in a direction of the flow of the gas through the conduit. The second temperature sensing element is disposed downstream of the heater in the direction of the flow of the gas.

The patentable scope of the inventive subject matter is defined by the claims, and may include other examples that occur to those of ordinary skill in the art.

## Claims

1. A system comprising:
a flow sensor (112) configured to be disposed in a conduit (102) in fluid connection with a flow of a gas through the conduit, the flow sensor (112) including a heater (114) and at least one temperature sensing element (116), the flow sensor configured to generate an electrical output based on the flow of the gas through the conduit (102); and
a controller (119) including one or more processors (118) operatively connected to the flow sensor (112) and configured to control operation of the heater (114) at multiple measurement intervals, the controller (119) operable in a pre-measurement mode and multiple measurement modes, the controller (119) in the pre-measurement mode operating the heater (114) at a pre-measurement setting, the controller (119) in the measurement modes operating the heater (114) at corresponding measurement settings that have at least one of increased power levels or longer operating durations relative to the pre-measurement setting of the heater, the controller (119) in the measurement modes configured to determine a flow rate of the gas based on at least one of an amplitude characteristic or a temporal characteristic of the electrical output of the flow sensor (112); **characterised in that** during each measurement interval, the controller operates in the pre-measurement mode and is configured to determine whether or not to operate in any of the measurement modes during a current measurement interval based on a dynamic response in the electrical output of the flow sensor to the heater operating at the pre-measurement setting, wherein said dynamic response represents the electrical output of the flow sensor (112) as the heater (114) warms up and cools down.

2. The system of claim 1, wherein, during each measurement interval, the controller in the pre-measurement mode activates and deactivates the heater in one or more pulses and analyzes a dynamic response in the electrical output of the flow sensor during the one or more pulses.

3. The system of any of claims 1-2, wherein the controller in the pre-measurement mode is configured to analyze a dynamic response in the electrical output of the flow sensor to the heater operating at the pre-measurement setting, and, responsive to one or more characteristics of the dynamic response being within a designated threshold range relative to a stored profile, the controller is configured to not operate in any of the measurement modes during the current measurement interval.

4. The system of any of claims 1-3, wherein the one or more characteristics of the dynamic response include at least one of an amplitude, a frequency, a slope, a waveform shape, or an area under a curve of the dynamic response of the electrical output.

5. The system of any of claims 1-4, wherein the controller in the pre-measurement mode is configured to analyze a dynamic response in the electrical output of the flow sensor to the heater operating at the pre-measurement setting, and, responsive to the one or more characteristics of the dynamic response being outside of the designated threshold range relative to the stored profile, the controller is configured to operate in one of the measurement modes during the current measurement interval to determine the flow rate of the gas based on the electrical output of the heater while the heater operates at the corresponding measurement setting that is associated with the one measurement mode.

6. The system of any of claims 1-5, wherein the measurement modes include a calorimetric mode, a vortex shedding mode, and a cross-calibration mode, wherein, during each measurement interval, the controller initially operates in the pre-measurement mode and is configured to determine whether to subsequently operate in the calorimetric mode, the vortex shedding mode, or the cross-calibration mode based on a dynamic response in the electrical output of the flow sensor to the heater operating at the pre-measurement setting.

7. The system of claim 6, wherein the controller in the calorimetric mode operates the heater for a first operating duration, the controller in the vortex shedding mode and the cross-calibration mode operating the heater for respective operating durations that are longer than the first operating duration.

8. The system of any of claims 1-7, wherein the controller in the vortex shedding mode operates the heater at a first power level, the controller in the calorimetric mode and the cross-calibration mode operating the heater at respective power levels that are higher than the first power level.

9. The system of any of claims 1-8, wherein the at least one temperature sensing element includes a first temperature sensing element and a second temperature sensing element, the first temperature sensing element disposed upstream of the heater in a direction of the flow of the gas through the conduit, the second temperature sensing element disposed downstream of the heater in the direction of the flow of the gas.

10. The system of any of claims 1-9, further comprising a flow disrupter configured to be disposed in the conduit, the flow disrupter configured to impart disturbances to the flow of the gas through the conduit.

11. The system of any of claims 1-10, wherein the conduit defines a primary channel and a by-pass channel in fluid connection with the primary channel, the flow disrupter disposed in the primary channel, the flow sensor disposed along the by-pass channel.

12. The system of any of claims 1-11, wherein the flow sensor is a micro-electro-mechanical (MEMS) sensor.

13. A method comprising:
pulsing a heater of a flow sensor at a pre-measurement setting, the flow sensor disposed in a conduit in fluid connection with a flow of a gas through the conduit, the flow sensor further including at least one temperature sensing element and configured to generate an electrical output based on the flow of the gas through the conduit; **characterised by**
analyzing, using one or more processors, a dynamic response in the electrical output of the flow sensor during the pulsing of the heater, the dynamic response representing the electrical output of the flow sensor (112) as the heater (114) warms up and cools down and
responsive to one or more characteristics of the dynamic response being outside of a designated threshold range relative to a stored profile, controlling the heater to operate at a measurement setting that is one of multiple measurement settings, the measurement settings of the multiple measurement settings having at least one of an increased power level or a longer operating duration relative to the pre-measurement setting of the heater.

14. The method of claim 13, further comprising determining a flow rate of the gas based on at least one of an amplitude characteristic or a temporal characteristic of the electrical output of the flow sensor responsive to the heater operating at the measurement setting.

## Patentansprüche

1. Ein System umfassend:
einen Strömungssensor (112), der konfiguriert ist, um in einer Leitung (102) in Fluidverbindung mit einer Strömung eines Gases durch die Leitung angeordnet zu werden, wobei der Strömungssensor (112) eine Heizeinrichtung (114) und mindestens ein Temperaturerfassungselement (116) umfasst, wobei der Strömungssensor konfiguriert ist, um einen elektrischen Output auf der Basis des Gasstroms durch die Leitung (102) zu generieren; und
eine Steuerung (119), die einen oder mehrere Prozessoren (118) umfasst, der/ die operativ mit dem Strömungssensor (112) verbunden ist/ sind und konfiguriert ist/ sind, um den Betrieb der Heizeinrichtung (114) in mehrfachen Messintervallen zu steuern, wobei die Steuerung (119) in einem Vormessmodus und multiplen Messmodi betreibbar ist, wobei die Steuerung (119) im Vormessmodus die Heizeinrichtung (114) in einer Vormesseinstellung betreibt, wobei die Steuerung (119) in den Messmodi die Heizeinrichtung (114) in entsprechenden Messeinstellungen betreibt, die mindestens eines von erhöhte Leistungsstufen oder längere Betriebsdauern im Vergleich zur Vormesseinstellung der Heizeinrichtung hat, wobei die Steuerung (119) in den Messmodi konfiguriert ist, um eine Strömungsrate des Gases auf Basis mindestens eines von ein Amplitudenmerkmal oder ein zeitliches Merkmal des elektrischen Outputs des Strömungssensors (112) zu bestimmen; **dadurch gekennzeichnet, dass**
während jedes Messintervalls die Steuerung im Vormessmodus arbeitet und konfiguriert ist, um zu bestimmen, ob während eines laufenden Messintervalls in einem der Messmodi gearbeitet werden soll basierend auf einer dynamischen Reaktion auf den elektrischen Output des Strömungssensors zu der Heizeinrichtung, die in der Vormesseinstellung arbeitet, wobei jene dynamische Reaktion den elektrischen Output des Strömungssensors (112) repräsentiert, da sich die Heizeinrichtung (114) erwärmt und abkühlt.

2. Das System nach Anspruch 1, wobei, während jedes Messintervalls die Steuerung im Vormessmodus die Heizeinrichtung in einem oder mehreren Pulsen aktiviert und deaktiviert und eine dynamische Reaktion im elektrischen Output des Strömungssensors während des einen oder der mehreren Pulse analysiert.

3. Das System nach einem der Ansprüche 1 bis 2, wobei die Steuerung im Vormessmodus konfiguriert ist, um eine dynamische Reaktion im elektrischen Output des Strömungssensors zur Heizeinrichtung, die in der Vormesseinstellung arbeitet, zu analysieren und, als Antwort auf eine oder mehrere Merkmale der dynamischen Reaktion, die innerhalb eines festgelegten Schwellenbereichs relativ zu einem gespeicherten Profil ist, die Steuerung konfiguriert ist, um nicht in einem der Messmodi während des laufenden Messintervalls zu arbeiten.

4. Das System nach einem der Ansprüche 1 bis 3, wobei das eine oder die mehreren Merkmale der dynamischen Reaktion mindestens eines von eine Amplitude, eine Frequenz, eine Steigung, eine Wellenform oder eine Fläche unter einer Kurve der dynamischen Reaktion auf den elektrischen Output umfasst.

5. Das System nach einem der Ansprüche 1 bis 4, wobei die Steuerung im Vormessmodus konfiguriert ist, um eine dynamische Reaktion im elektrischen Output des Strömungssensors an die Heizeinrichtung zu analysieren, die in der Vormesseinstellung arbeitet, und, als Antwort auf die ein oder die mehreren Merkmale der dynamischen Reaktion, die außerhalb des festgelegten Schwellenbereichs relativ zu einem gespeicherten Profil ist, die Steuerung konfiguriert ist, um in einem der Messmodi während des laufenden Messintervalls zu arbeiten, um die Strömungsrate des Gases auf Basis des elektrischen Outputs der Heizeinrichtung zu bestimmen, während die Heizeinrichtung in der korrespondierenden Messeinstellung arbeitet, die mit dem einen Messmodus assoziiert ist.

6. Das System nach einem der Ansprüche 1 bis 5, wobei die Messmodi einen kalorimetrischen Modus, einen Wirbelablösungsmodus und einen Kreuzkalibrierungsmodus umfassen, wobei während jedes Messintervalls, die Steuerung initial im Vormessmodus arbeitet und konfiguriert ist, um zu bestimmen, ob im Folgenden im kalorimetrischen Modus, im Wirbelablösungsmodus oder im Kreuzkalibrierungsmodus gearbeitet werden soll, auf Basis der dynamischen Reaktion im elektrischen Output des Strömungssensors zur Heizeinrichtung, die in der Vormesseinstellung arbeitet.

7. Das System nach Anspruch 6, wobei die Steuerung im kalorimetrischen Modus die Heizeinrichtung für eine erste Betriebsdauer betreibt, wobei die Steuerung im Wirbelablösungsmodus und Kreuzkalibrierungsmodus die Heizeinrichtung für jeweilige Betriebsdauern betreibt, die länger sind als die erste Betriebsdauer.

8. Das System nach einem der Ansprüche 1 bis 7, wobei die Steuerung im Wirbelablösungsmodus die Heizeinrichtung auf einer ersten Leistungsstufe betreibt, wobei die Steuerung im kalorimetrischen Modus und im Kreuzkalibrierungsmodus die Heizeinrichtung auf entsprechenden Leistungsstufen betreibt, die höher sind als die erste Leistungsstufe.

9. Das System nach einem der Ansprüche 1 bis 8, wobei das mindestens eine Temperaturerfassungselement ein erstes Temperaturerfassungselement und ein zweites Temperaturerfassungselement umfasst, wobei das erste Temperaturerfassungselement stromaufwärts der Heizeinrichtung in einer Richtung des Gasstromes durch die Leitung angeordnet ist und das zweite Temperaturerfassungselement stromabwärts der Heizeinrichtung in der Richtung des Gaststromes angeordnet ist.

10. Das System nach einem der Ansprüche 1 bis 9, ferner umfassend einen Strömungsunterbrecher, der konfiguriert ist, um in der Leitung angeordnet zu sein, wobei der Strömungsunterbrecher konfiguriert ist, um Verwirbelungen des Gasstromes durch die Leitung zu vermitteln.

11. Das System nach einem der Ansprüche 1 bis 10, wobei die Leitung einen Primärkanal und einen By-Pass-Kanal in Fluidverbindung mit dem Primärkanal definiert, wobei der Strömungsunterbrecher in dem Primärkanal angeordnet ist, wobei der Strömungssensor entlang des By-Pass-Kanals angeordnet ist.

12. Das System nach einem der Ansprüche 1 bis 11, wobei der Strömungssensor ein mikroelektromechanischer (MEMS) Sensor ist.

13. Ein Verfahren, umfassend:
Pulsen einer Heizeinrichtung eines Strömungssensors bei einer Vormesseinstellung, wobei der Strömungssensor in einer Leitung in Fluidverbindung mit einem Gasstrom durch die Leitung ist, wobei der Strömungssensor ferner mindestens ein Temperaturerfassungselement umfasst und konfiguriert ist, um einen elektrischen Output auf Basis des Gasstromes durch die Leitung zu erzeugen;
**gekennzeichnet durch**
Analysieren, unter Verwendung eines oder mehrerer Prozessoren, einer dynamischen Reaktion auf einen elektrischen Output des Strömungssensors während des Pulsens der Heizeinrichtung, wobei die dynamische Reaktion den elektrischen Output des Strömungssensors (112) darstellt, da die Heizeinrichtung (114) sich erwärmt und abkühlt und, als Antwort auf ein oder mehrere Merkmale der dynamischen Reaktion, die außerhalb des festgelegten Schwellenbereichs relativ zum gespeicherten Profil ist, Steuerung der Heizeinrichtung, um bei einer Messeinstellung zu arbeiten, die eine von multiplen Messeinstellungen ist, wobei die Messeinstellung der multiplen Messeinstellungen mindestens eines von eine erhöhte Leistungsstufe oder eine längere Betriebsdauer hat relativ zu den Vormesseinstellung der Heizeinrichtung.

14. Das Verfahren nach Anspruch 13, ferner umfassend das Bestimmen einer Strömungsrate des Gases auf Basis mindestens eines Amplitudenmerkmals oder eines zeitliche Merkmals des elektrischen Outputs des Strömungssensors als Antwort auf die Heizeinrichtung, die in der Messeinstellung arbeitet.

## Revendications

1. Système comprenant :
un capteur de débit (112) configuré pour être disposé dans un conduit (102) en communication fluidique avec un flux de gaz à travers le conduit, le capteur de débit (112) comprenant un élément chauffant (114) et au moins un élément de détection de température (116), le capteur de débit étant configuré pour générer une puissance électrique basée sur le débit du gaz à travers le conduit (102) ; et
un dispositif de commande (119) comprenant un ou plusieurs processeurs (118) reliés de manière fonctionnelle au capteur de débit (112) et configurés pour commander le fonctionnement de l'élément chauffant (114) à de multiples intervalles de mesure, le dispositif de commande (119) fonctionnant en mode de pré-mesure et dans des modes de mesure multiples, le dispositif de commande (119) en mode de pré-mesure commandant l'élément chauffant (114) à un réglage de pré-mesure, le dispositif de commande (119) dans les modes de mesure commandant l'élément chauffant (114) aux réglages de mesure correspondants qui ont au moins l'un parmi des niveaux de puissance accrus ou des durées de fonctionnement plus longues par rapport au réglage de pré-mesure de l'élément chauffant, le dispositif de commande (119) dans les modes de mesure, configuré pour déterminer une vitesse d'écoulement du gaz basée sur au moins une caractéristique parmi une caractéristique d'amplitude ou une caractéristique temporelle de la puissance électrique du capteur de débit (112) ; **caractérisé en ce que**
durant chaque intervalle de mesure, le dispositif de commande fonctionne en mode de pré-mesure et est configuré pour permettre de déterminer s'il doit ou non fonctionner dans l'un quelconque des modes de mesure durant un intervalle de mesure courant basé sur une réponse dynamique dans la puissance électrique du capteur de débit à l'élément chauffant fonctionnant au réglage de pré-mesure, où ladite réponse dynamique représente la puissance électrique du capteur de débit (112) lorsque l'élément chauffant (114) se réchauffe et refroidit.

2. Système selon la revendication 1, dans lequel, durant chaque intervalle de mesure, le dispositif de commande en mode de pré-mesure active et désactive l'élément chauffant en une ou plusieurs impulsions et analyse une réponse dynamique dans la puissance électrique du capteur de débit durant la ou les impulsions.

3. Système selon l'une quelconque des revendications 1-2, dans lequel le dispositif de commande en mode de pré-mesure est configuré pour analyser une réponse dynamique dans la puissance électrique du capteur de débit à l'élément chauffant fonctionnant au réglage de pré-mesure, et, en réponse à une ou plusieurs caractéristiques de la réponse dynamique comprises dans une plage seuil désignée par rapport à un profil mémorisé, le dispositif de commande est configuré pour ne pas fonctionner dans aucun des modes de mesure durant l'intervalle de mesure courant.

4. Système selon l'une quelconque des revendications 1-3, dans lequel la ou les caractéristiques de la réponse dynamique comprennent au moins l'une parmi : une amplitude, une fréquence, une pente, une forme d'onde ou une aire sous une courbe de la réponse dynamique de la puissance électrique.

5. Système selon l'une quelconque des revendications 1-4, dans lequel le dispositif de commande en mode de pré-mesure est configuré pour analyser une réponse dynamique dans la puissance électrique du capteur de débit à l'élément chauffant fonctionnant au réglage de pré-mesure, et, en réponse à une ou plusieurs caractéristiques de la réponse dynamique qui se trouvent en dehors de la plage seuil désignée par rapport à un profil mémorisé, le dispositif de commande est configuré pour fonctionner dans l'un des modes de mesure durant l'intervalle de mesure courant pour déterminer la vitesse d'écoulement du gaz basée sur la puissance électrique de l'élément chauffant alors que l'élément chauffant fonctionne au réglage de mesure correspondant qui est associé à un mode de mesure.

6. Système selon l'une quelconque des revendications 1-5, dans lequel les modes de mesure comprennent un mode colorimétrique, un mode de formation de tourbillons et un mode d'inter-étalonnage, dans lequel, durant chaque intervalle de mesure, le dispositif de commande fonctionne initialement en mode de pré-mesure et est configuré pour déterminer s'il doit par la suite fonctionner en mode calorimétrique, en mode de formation de tourbillons ou en mode d'inter-étalonnage basé sur une réponse dynamique dans la puissance électrique du capteur de débit à l'élément chauffant fonctionnant au réglage de pré-mesure.

7. Système selon la revendication 6, dans lequel le dispositif de commande en mode calorimétrique commande l'élément chauffant pendant une première durée de fonctionnement, le dispositif de commande en mode de formation de tourbillons et en mode d'inter-étalonnage commandant l'élément chauffant pendant des durées de fonctionnement respectives qui sont plus longues que la première durée de fonctionnement.

8. Système selon l'une quelconque des revendications 1-7, dans lequel le dispositif de commande en mode de formation de tourbillons commande l'élément chauffant à un premier niveau de puissance, le dispositif de commande en mode calorimétrique et en mode d'inter-étalonnage commandant l'élément chauffant à des niveaux de puissance respectifs qui sont supérieurs au premier niveau de puissance.

9. Système selon l'une quelconque des revendications 1-8, dans lequel ledit au moins un élément de détection de température comprend un premier élément de détection de température et un second élément de détection de température, le premier élément de détection de température étant disposé en amont de l'élément chauffant dans une direction de l'écoulement du gaz à travers le conduit, le second élément de détection de température étant disposé en aval de l'élément chauffant dans la direction de l'écoulement du gaz.

10. Système selon l'une quelconque des revendications 1-9, comprenant en outre un perturbateur d'écoulement configuré pour être disposé dans le conduit, le perturbateur d'écoulement étant configuré pour créer des perturbations dans l'écoulement du gaz à travers le conduit.

11. Système selon l'une quelconque des revendications 1-10, dans lequel le conduit définit un canal principal et un canal de dérivation en communication fluidique avec le canal principal, le perturbateur d'écoulement étant disposé dans le canal principal, le capteur de débit étant disposé le long du canal de dérivation.

12. Système selon l'une quelconque des revendications 1-11, dans lequel le capteur de débit est un micro-capteur électromécanique (MEMS).

13. Procédé comprenant :
la délivrance d'une impulsion à un élément chauffant d'un capteur de débit à un réglage de pré-mesure, le capteur de débit étant disposé dans un conduit en communication fluidique avec un flux d'un gaz à travers le conduit, le capteur de débit comprenant en outre au moins un élément de détection de température et est configuré pour générer une puissance électrique basée sur le débit du gaz à travers le conduit ;
**caractérisé par**
l'analyse, à l'aide d'un ou de plusieurs processeurs, d'une réponse dynamique dans la puissance électrique du capteur de débit durant la délivrance d'impulsion à l'élément chauffant, la réponse dynamique représentant la puissance électrique du capteur de débit (112) lorsque l'élément chauffant (114) se réchauffe et refroidit, et
en réponse à une ou plusieurs caractéristiques de la réponse dynamique en dehors d'une plage seuil désignée par rapport à un profil mémorisé, la commande de l'élément chauffant pour qu'il fonctionne à un réglage de mesure qui est l'un des multiples réglages de mesure, les réglages de mesure des multiples réglages de mesure ayant au moins un niveau de puissance accru ou une durée de fonctionnement plus longue par rapport au réglage de pré-mesure de l'élément chauffant.

14. Procédé selon la revendication 13, comprenant en outre la détermination d'une vitesse d'écoulement du gaz basée sur au moins l'une parmi une caractéristique d'amplitude ou une caractéristique temporelle de la puissance électrique du capteur de débit en réponse à l'élément chauffant fonctionnant au réglage de mesure.
